(19) **Europäisches Patentamt**

**European Patent Office**

**Office européen des brevets**

(11) **EP 1 034 388 B1**

(12) **EUROPÄISCHE PATENTSCHRIFT**

(45) Veröffentlichungstag und Bekanntmachung des Hinweises auf die Patenterteilung:
**20.02.2002 Patentblatt 2002/08**

(51) Int Cl.⁷: **F16H 61/02**

(21) Anmeldenummer: **98962262.6**

(22) Anmeldetag: **16.11.1998**

(86) Internationale Anmeldenummer:
**PCT/DE98/03350**

(87) Internationale Veröffentlichungsnummer:
**WO 99/28658 (10.06.1999 Gazette 1999/23)**

(54) **STEUERUNG FÜR EIN AUTOMATISCHES KRAFTFAHRZEUGGETRIEBE**

CONTROL FOR AN AUTOMATIC TRANSMISSION IN A MOTOR VEHICLE

COMMANDE DE BOITE DE VITESSES AUTOMATIQUE D'UN VEHICULE

(84) Benannte Vertragsstaaten:
**DE FR GB IT**

(30) Priorität: **27.11.1997 DE 19752623**

(43) Veröffentlichungstag der Anmeldung:
**13.09.2000 Patentblatt 2000/37**

(73) Patentinhaber: **SIEMENS AKTIENGESELLSCHAFT**
**80333 München (DE)**

(72) Erfinder:
- **GRAF, Friedrich**
  **D-93049 Regensburg (DE)**
- **HAUPTMANN, Werner**
  **D-85635 Höhenkirchen (DE)**
- **HEESCHE, Kai**
  **D-81539 München (DE)**

(56) Entgegenhaltungen:
| | |
|---|---|
| EP-A- 0 576 703 | WO-A-97/25555 |
| DE-A- 4 312 415 | US-A- 5 031 100 |

**Beschreibung**

Bei einer bekannten Steuerung für ein Kraftfahrzeuggetriebe werden die Gänge in Abhängigkeit zumindest von der Fahrpedalstellung und der Fahrzeuggeschwindigkeit anhand von abgespeicherten Schaltkennfeldern automatisch geschaltet. Außerdem wird der Lastzustand des Kraftfahrzeugs und der Fahrstil des Fahrers berücksichtigt. Durch einen Fuzzy-Logik-Regler werden verschiedene Signale, die Betriebszustände des Kraftfahrzeugs melden, ausgewertet und daraufhin mehrere Steuersignale erzeugt, mit denen unter anderem eines von mehreren Schaltkennfeldern ausgewählt wird (EP 0 576 703 A1).

Bekannt ist auch ein Vorschlag für eine fuzzylogik-basierte, kontinuierliche Schaltpunktermittlung, bei der die Auswahl des Schaltpunkts über eine Interpolation zwischen je zwei Basiskennlinien vorgenommen wird (Petersen, R.: "Gleitende Schaltpunktermittlung beim Volkswagen-Automatikgetriebe AG4 mittels Fuzzy-Logik", Fuzzy-Neuro-Systeme 1995). Über die Bestimmung eines sogenannte Sportlichkeitsfaktors erfolgt dabei eine nur eindimensionale Auswertung zwischen zwei Kennlinien (Eco, Sport).

Nicht nur eine vom Fahrer vorgenommene Evaluierung des Schaltzeitpunktes, sondern einen expliziten Trainingsmodus sieht eine bekannte Getriebesteuerung vor (EP 0 645 559 A1), bei der der Fahrer in einem manuellen Schaltmodus als Lehrer für ein neuronales Netz agiert (Supervised Learning). Dabei muß während einer Trainingsphase ein im manuellen Schalten versierter Fahrer das System trainieren, also eine Gangwahl vorgeben, um eine zielgerichtete Adaption zu erreichen.

Ein bekanntes Steuersystem zum Schalten eines automatischen Getriebes weist ein als Fuzzy-System ausgebildetes Klassifikationssystem zum Klassifizieren des Fahrstils, des jeweiligen Fahrmanövers oder des Straßentyps auf (siehe gattungsbildende WO 97/25555). Abhängig von dieser Klassifizierung wird die Übersetzung des Getriebes anhand von Übersetzungswahlmustern festgelegt, die in einem Speicher abgelegt sind. Manuelle Schaltbefehle des Fahrers werden in einer Bewertungsschaltung ausgewertet und abhängig davon das Schaltverhalten des Getriebes mit Hilfe einer Parametrierungsschaltung und/oder einer Selektionsschaltung an das vom Fahrer gewünschte Schaltverhalten angepaßt.

Der Erfindung liegt die Aufgabe zugrunde, eine Steuerung für ein automatisches Kraftfahrzeuggetriebe zu schaffen, die durch Schaltentscheidungen des Fahrers während des Fahrbetriebes einfach und wirksam an das von ihm gewünschte Schaltverhalten angepaßt wird. Der Fahrer soll dazu nicht einen besonderen Lernmodus der Getriebesteuerung wählen müssen.

Diese Aufgabe wird durch eine Getriebesteuerung nach Anspruch 1 gelöst. Zweckmäßige Weiterbildungen der Erfindung sind in den Unteransprüchen niedergelegt.

Die Vorteile der Erfindung liegen insbesondere darin, daß der Fahrer im normalen Fahrbetrieb durch einfache Schaltbefehle interveniert, d. h. der Getriebesteuerung seine Wünsche bezüglich des Fahrverhaltens mitteilt. Da die Erfindung auf einer Interpolation zwischen Kennfeldern basiert, wird das Schaltverhalten des Getriebes nicht allein durch ein neuronales Netz repräsentiert, bei dem durch Fehleingaben eine unerwünschte Schaltcharakteristik erlernt werden könnte.

In Kennfeldern der Getriebesteuerung sind die Schaltpunkte oder die Übersetzungen des Getriebes abhängig von Betriebsparametern des Kraftfahrzeugs, wie zum Beispiel der Stellung des Fahrpedals und der Kraftfahrzeuggeschwindigkeit, oder auch der Sollmotordrehzahl, der Sollübersetzung, des Soll-Motordrehmoments oder des Soll-Radmoments, gespeichert.

Ein Ausführungsbeispiel der Erfindung wird im folgenden anhand der Zeichnung erläutert. Es zeigen:

Figur 1:  eine erfindungsgemäße Steuerung für ein automatisches Getriebe

Figur 2:  ein Fuzzy-System und eine Kennfeld-Überlagerungsschaltung der Steuerung nach Figur 1:

Figur 3:  ein zur Erläuterung der Kennfeld-Überlagerungsschaltung nach Figur 2 dienendes Diagramm, und

Figuren 4 bis 6:  die Zugehörigkeitsfunktionen der Ausgangsvariable Fahrerverhalten des Fuzzy-Systems nach Figur 2, in drei Diagrammen, zur Erläuterung der Adaption des Fuzzy-Systems an den Fahrerwunsch.

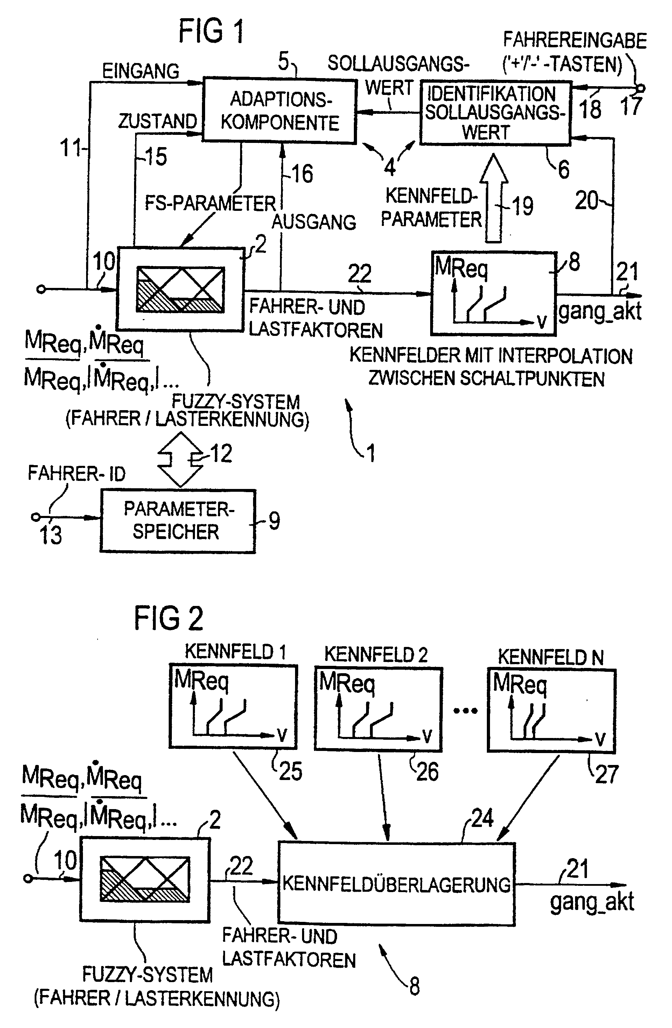

Eine Steuerung 1 (Figur 1) für ein automatisches Kraftfahrzeuggetriebe - im folgenden als Getriebesteuerung 1 bezeichnet - enthält ein Fuzzy-System 2, eine Adaptionsschaltung 4, die aus einer Adaptionskomponente 5 und einer Identifikationsschaltung 6 besteht, eine Kennfeldschaltung 8 und einen Parameter- oder Identifikationsspeicher 9.

Das Fuzzy-System 2 empfängt über eine Eingangsleitung 10 der Stellung der Drosseiklappe oder des Fahrpedals (hier nicht dargestellt, siehe EP 0 576 703 A1) entsprechende oder davon abgeleitete Signale: eine der Drosselklappenstellung oder dem Fahrpedalwert des Kraftfahrzeugs entsprechende Momentenanforderung $M_{req}$, die zeitliche Ableitung des Wertes der Momentenanforderung $\dot{M}_{Req}$, den Durchschnittswert des Momentenanforderungswertes $\overline{M}_{Req}$ und den Durchschnittswert des Betrages der Ableitung des Momentenanforderungswertes $\overline{|\dot{M}_{Req}|}$. Alternativ kann das Fuzzy-System 2 auch das Soll-Motordrehmoment, das Soll-Radmoment und davon abgeleitete Größen erfassen. Die jeweiligen Eingangswerte gelangen auch über eine Signalleitung 11 zu einem Eingang der Adaptionskomponente 5.

Das Fuzzy-System 2 tauscht über eine bidirektionale Datenleitung 12 Daten mit dem Parameterspeicher 9 aus. Dieser empfängt über eine Eingangsleitung 13 eine Fahreridentifikation. Über eine Signalleitung 15 gelangen Informationen über den Zustand des Fuzzy-Systems 2 und über eine Signalleitung 16 die Ausgangssignale des Fuzzy-Systems 2 zu der Adaptionskomponente 5. Diese hat somit eine exakte Kenntnis des Zustands und des Dateninhalts des Fuzzy-Systems 2.

Über eine Eingangsleitung 18 gelangen die Fahrereingaben zu der Identifikationsschaltung 6. Der Fahrer des Kraftfahrzeugs gibt seine Eingaben über ein Eingabeorgan 17, zum Beispiel eine Taste, eine Schaltwippe oder dergleichen, ein, wobei er entweder um eine Gangstufe hochschalten - im folgenden als Plus-Befehl bezeichnet - oder um eine Gangstufe rückschalten - im folgenden als Minus-Befehl bezeichnet, kann.

Die Sollausgangswert-Identifikationsschaltung 6 empfängt über eine Datenleitung 19 Kennfeldparameter von der Kennfeldschaltung 8 und über eine Signalleitung 20 das Ausgangssignal der Kennfeldschaltung 8. Dieses Ausgangssignal gang_akt gelangt über eine Ausgangsleitung 21 zu dem für sich bekannten und hier nicht dargestellten automatischen Getriebe des Kraftfahrzeugs und legt die durch die Getriebesteuerung 1 ausgewählte Fahrstufe oder Getriebegang fest.

Die bislang vereinfacht dargestellte Kennfeldschaltung 8 enthält eine Kennfeld-Überlagerungsschaltung 24 (Figur 2), der das Ausgangssignal des Fuzzy-Systems 2 zugeführt wird, das die aus der EP 0 576 703 A1 bekannten Fahrer- und Lastfaktoren enthält. Dieses Ausgangssignal bewirkt in der Überlagerungsschaltung 24 eine Überlagerung von Kennfelddaten, die in mehreren Kennfeldern 25, 26, 27 usw. abgelegt sind. Die Übernahme der Daten von den Kennfeldern 25 bis 27 in die Überlagerungsschaltung 24 ist in Figur 2 durch Pfeile angedeutet. Die Art der Überlagerung wird nachfolgend noch erläutert.

Die Getriebesteuerung 1 paßt ihr Schaltverhalten kontinuierlich an das Fahrverhalten des Fahrers und an die Belastungssituation des Fahrzeugs an, indem es mittels der von dem Fuzzy-System 2 berechneten Werte für das Fahrerverhalten und den Belastungszustand über eine Interpolation zwischen den verschiedenen Kennfeldern 25-27 einen Gang auswählt. Wenn der Fahrer mit dem Schaltverhalten des Fahrzeugs nicht einverstanden ist, so hat er die Möglichkeit, über eine '-'-Taste des Eingabeorgans 17 einen Gang zurückzuschalten und über eine '+'-Taste einen Gang hochzuschalten.

Die Interventionshandlung des Fahrers wird der Identifikationsschaltung 6 übergeben und in Sollausgangswerte für das Fuzzy-System überführt, die an die Adaptionskomponente 5 übermittelt werden. Daraufhin paßt die Adaptionskomponente 5 die Parameter des Fuzzy-Systems 2 derart an, daß die Getriebesteuerung das vom Fahrer gewünschte Schaltverhalten annimmt. Die fahrerabhängig modifizierten Parameter des Fuzzy-Systems werden in dem Parameterspeicher 9 gespeichert. In diesem sind die Parameter für verschiedene Fahrer abgelegt, die wiederum über eine Fahrer-ID oder -Identifikation aktiviert werden. Der Parameterspeicher 9 kann beispielsweise in den Bordcomputer integriert sein und über verschiedene Fahrzeugschlüssel angesprochen werden, oder jeder Fahrer erhält einen eigenen Parameterspeicher in Form einer Speicherkarte. Wenn das Kraftfahrzeug einen Sitzpositionspeicher für den Fahrersitz hat, kann die Identifikation eines Fahrers auch in Verbindung mit der für ihn abgespeicherten Sitzposition erfolgen.

Soll aus wirtschaftlichen Gründen auf den Parameterspeicher 9 verzichtet werden, kann die Getriebesteuerung 1 an das Fahrverhalten eines Fahrers angepaßt werden, indem in einem Lernmodus - den zum Beispiel die Kraftfahrzeugwerkstatt vorübergehend aktiviert - ein Satz fahrerabhängig modifizierter Parameter für das Fuzzy-System 2 erzeugt und in diesem gespeichert werden.

Ausgangspunkt für die nachfolgende Erläuterung der erfindungsgemäßen kontinuierlicher Kennfeld-Modellierung ist die in [EP 0 576 703 A1] realisierte Auswahl eines aus N Schaltkennfeldern (1-aus-N), wobei mittels eines Fuzzy-Systems oder Fuzzy-Logik-Reglers die Bestimmung von aktuellem Fahrertyp und Lastsituation durchgeführt wird (Bild 2). Die Kennfelder können auch das variable Übersetzungsverhältnis eines CVT-Getriebes (oder dessen einzustellende Sollmotordrehzahl) festlegen. Um ein verbessertes und online-adaptierbares Schaltverhalten zu erreichen, das heißt ein Schaltverhalten, das während des Fahrbetriebs an das Fahrverhalten des Fahrers angepaßt wird, wird die 1-aus-N-Auswahl erfindungsgemäß durch eine kontinuierliche Änderung des Schaltkennlinienverlaufs ersetzt.

Bei einem kontinuierlichen Übergang zwischen verschiedenen Schaltkennfeldern bilden die Kennfelder 25, 26 und 27 als Grundkennfelder die Ausgangsbasis (Figur 2). Zur Ermittlung eines Schaltpunktes werden die einzelnen Grundkennfelder über ein Klassifikationsverfahren gewichtet überlagert, so daß der Schaltpunkt möglichst demjenigen entspricht, den der Fahrer bei manueller Schaltung gewählt hätte. Durch den kontinuierlichen Übergang werden die bekannten Einzelkennfelder der 1-aus-N-Auswahl, wie z.B. "Ökonomisch", "Mittel", "Sport", "Last 1" und "Last 2", durch, je einen Satz von Grenzschaltkennlinien enthaltende, Grenz- oder "Extrem"-Kennfelder, z.B. "Extrem Ökonomisch", "Extrem Sportlich" und "Hohe Last" ersetzt. Die daraus resultierende Verringerung der Kalibrationsdaten bedingt allerdings eine leichte Erhöhung des Berechnungsaufwandes während des Betriebs.

Ein wesentlicher Vorteil der erfindungsgemäßes Lösung liegt aber in der Transparenz für den Entwickler, da er seine Schaltkennfelder weitgehend wie bisher entwirft. Außerdem entfällt dadurch auch der Aufwand zum Kalibrieren von Zwischenkennfeldern (bei einem Viergang-Automatikgetriebe müssen hierfür normalerweise 60 Stützpunkte definiert werden).

Um den kontinuierlichen Übergang zwischen den Kennfeldern zu erreichen, wird eine Interpolation zwischen Schaltpunkten durchgeführt, bei der die Schaltpunkte verschiedener Schaltkennfelder 25-27 einander gewichtet überlagert werden, wobei die Schaltkennlinien *SKL* nur als Funktion

$$v_{sp}\left(M_{Req}\right) = SKL\left(M_{Req}\right) \qquad (1)$$

vorliegen müssen. Über diese Funktion wird die für einen vorgegebenen Fahrpedal- oder Momentenanforderungswert $M_{Req}$ resultierende Schaltpunktgeschwindigkeit $v_{sp}$ berechnet, bei deren Überschreitung oder Unterschreitung hoch- bzw. heruntergeschaltet wird. Es sind also alle Schaltkennfelder 25-27 zur gleichen Zeit aktiv und leisten einen Beitrag zur Berechnung des aktuellen Schaltpunktes.

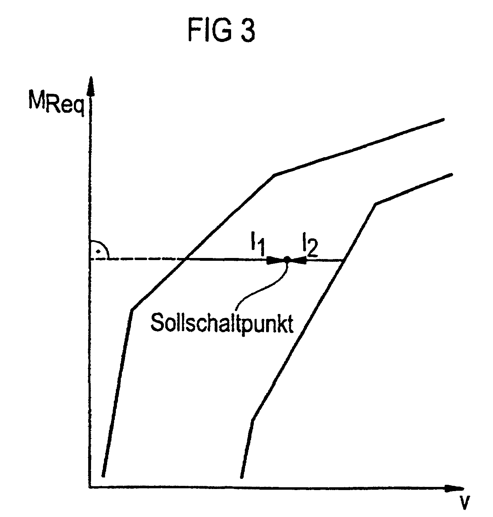

Aus Figur 3 ist ein Beispiel für die Interpolation zwischen zwei Schaltpunkten ersichtlich. Für jede Schaltkennlinie $SKL_i$ wird deren aktuelle Schaltpunktgeschwindigkeit $v_{sp,i}$ ermittelt und danach werden die einzelnen Schaltpunktgeschwindigkeiten zur resultierenden Schaltpunktgeschwindigkeit $v_{sp}$ , linear über $w_{sp,1}$ gewichtet, addiert:

$$v_{sp}\left(M_{Req}\right) = \frac{\sum_i w_{sp,i} \cdot v_{sp,i}\left(M_{Req}\right)}{\sum_i w_{sp,i}} = \frac{\sum_i w_{sp,i} \cdot SKL_i\left(M_{Req}\right)}{\sum_i w_{sp,i}} \qquad (2)$$

Hierbei werden die Gewichte $w_{sp,i}$ für die einzelnen Schaltkennlinien über die Fahrerklasse und die Lastklasse bestimmt.

Ein wesentlicher Vorteil dieser Lösung liegt darin, daß, da wie erwähnt die Schaltkennlinien nur als Funktion vorliegen müssen, die Anzahl und die Lage der Stützpunkte der einzelnen Schaltkennlinien voneinander unabhängig sind, so daß beim Entwurf der Schaltkennfelder eine große Freiheit besteht.

Die Funktion der Identifikationsschaltung 6 für den Sollausgangswert ist folgende. Durch den Einsatz einer eindimensionalen Interpolation sind die Sollwerte für einen einzelnen Ausgang, d.h. für ein Ausgangssignal des Fuzzy-Systems 2, eindeutig bestimmt. Um die Zuordnung einer Fahrerintervention zu dem Last- oder dem Fahrerausgang (ssignal) des Fuzzy-Klassifikators zu realisieren, wird eine Priorisierung der Ausgänge vorgenommen werden. Dies bedeutet, daß sobald eine Lastsituation festgestellt wird, nur eine Adaption des Lastausgangs des Fuzzy-Klassifikators erfolgt. Wird keine Last erfaßt, wird nur das Fahrerverhalten adaptiert. Diese Vorgehensweise stellt sicher, daß sich bei einer Intervention des Fahrers auf bergiger Straße das Schaltverhalten auf ebener Straße nicht ändert. Dies ist in sofern sinnvoll, als die meisten Fahrzeuge seltener auf bergiger als auf ebener Straße bewegt werden.

Im vorhergehenden Abschnitt ist beschrieben worden, wie das Schaltverhalten einer Getriebesteuerung an verschiedene Fahrer- und Lastsituationen kontinuierlich angepaßt wird. Durch Interventionshandlungen des Fahrers wird die Getriebesteuerung 1 mit Fahrer- und Lastidentifikation auch an die Fahrerwünsche angepaßt. Dies ist notwendig, da eine einzige Abstimmung der Getriebesteuerung nicht alle vorkommenden Fahrertypen abdecken kann. Um die Anpassungsfähigkeit des Fahrer- und Lastklassifikators zu erreichen, müssen aus einer gegebenen Fahrerintervention, d.h. einer Festlegung eines Sollschaltpunktes, die für diesen Fall korrekten Ausgabeparameter des Fahrer- und Lastklassifikators berechnet werden. Da aus den Ausgabeparametern des Klassifikators die Parameter für die Berechnung der Schaltpunkte abgeleitet werden, muß für die Identifikation des Sollschaltpunktes dessen Ähnlichkeit - im einfachsten Fall dessen Abstand - zu bestehenden Schaltkennlinien bestimmt werden, um aus dieser Ähnlichkeit wiederum die Sollausgangswerte des Klassifikators zu bestimmen.

Die Ähnlichkeit eines Schaltpunktes zu einer Schaltkennlinie i wird über dessen Abstand $l_i$ zu eben dieser Schaltkennlinie berechnet. Aus Figur 3 ist zu ersehen, wie der Abstand in eindimensionaler Richtung bei konstanter Momentenanforderung berechnet wird. Da die Ähnlichkeit oder der Abstand eines Schaltpunktes normiert im Intervall [0,1] liegen soll, kann diese Ähnlichkeit $D_i$ einer Schaltkennlinie i über die Gleichung

$$D_i = 1 - \frac{|l_i|}{\sum_i |l_i|} \in [0,1] \qquad (3)$$

berechnet werden. Darin sind:

$D_i$    der Ähnlichkeitswert einer Schaltkennlinie i zu einem gegebenen Schaltpunkt und

$l_i$    der Abstand eines Schaltpunktes zu einer Schaltkennlinie i

Mit dem so definierten Abstandsmaß werden nun die Sollausgangswerte des Klassifikators in Abhängigkeit von der Kennfeldmodellierung, d.h. der Überlagerung der Kennfelder 25-27, bestimmt. Da der eingesetzte Fuzzy-Klassifikator Fahrer- und Lastklasse getrennt ausgibt, muß eine Priorisierung durchgeführt werden, um eine eindeutige Zuordnung des Fahrerkorrekturwunsches vornehmen zu können. Diese Priorisierung kann beispielsweise vorsehen, die Fahrerklasse nur dann zu adaptieren, wenn keine Lastsituation vorliegt.

Am Beispiel des Fahrerklassifikators ergibt sich der Sollausgangswert $O_{Fahrer}$ dann durch die mit den Ähnlichkeiten $D_{eco}$ bzw. $D_{sport}$ gewichtete Summe der Ausgangswerte

$$O_{Fahrer} = D_{eco} \cdot O_{Fahrer,eco} + D_{sport} \cdot O_{Fahrer,sport}, \tag{4}$$

wobei $O_{Fahrer,eco}$ bzw. $O_{Fahrer,sport}$ die jeweiligen Ausgangswerte des Fahrerklassifikators für die Fahrereigenschaft eco bzw. *sport* sind.

Ein online-adaptiver Fuzzy-Klassifikator schließt zwei Schaltungsbestandteile ein (Figur 1): das Fuzzy-System 2 zur Fahrer- und Lasterkennung und die Adaptionskomponente oder -schaltung 5. Während der Betriebs des Fuzzy-Systems 2 wird es von der Adaptionskomponente 9 beobachtet, d.h. diese übernimmt laufend die Eingangs- und Ausgangssignale sowie die Zustandsgrößen des Fuzzy-Systems 2. Sobald eine Fahrerintervention stattfindet, werden über die Identifikationsschaltung 6 neue Sollwerte für die Ausgänge des Fuzzy-Systems 2 berechnet und der Adaptionskomponente 5 zugeführt. Diese benötigt hierbei Informationen über die Soll- und Ist-Werte der Fuzzy-Systemausgänge, sowie über die Eingangssignale und über den Zustand des Fuzzy-Systems 2.

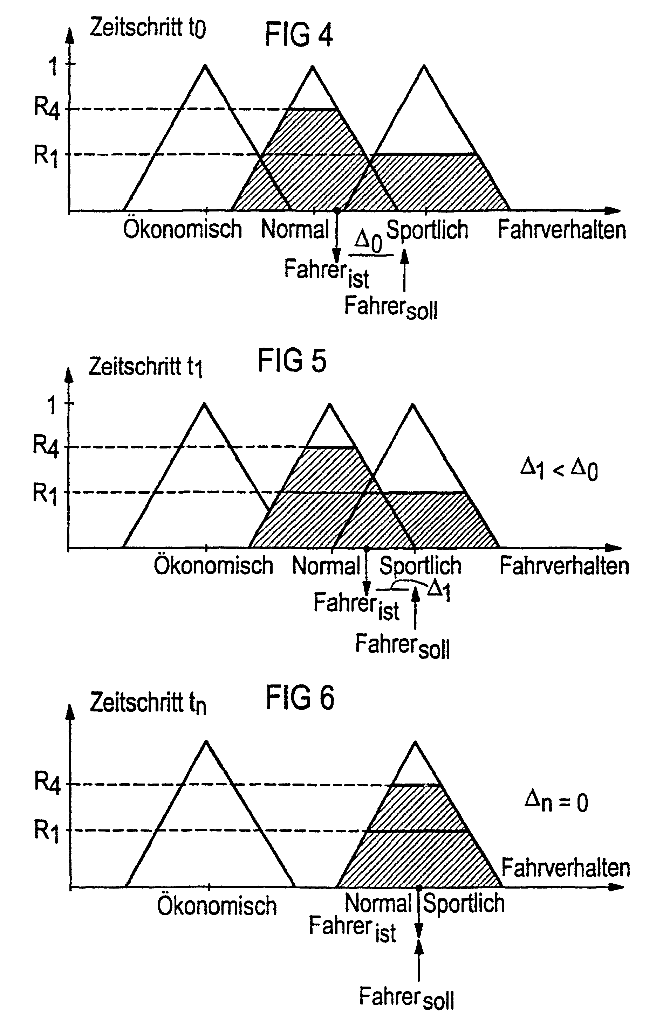

Um das Fuzzy-System 2 auf Basis der Soll-, Ist- und Zustandsdaten anzupassen, werden durch eine Adaption der Ausgangszugehörigkeitsfunktionen die aktivierten Ausgangszugehörigkeitsfunktionen in Richtung des Sollausgangswertes verschoben. Aus Figur 4 ist ein Beispiel für die Ausgangsvariable *Fahrerverhalten* ersichtlich, bei dem zwei Regeln aktiviert sind. Der Ausgangswert *Fahrer$_{ist}$* ergibt sich durch die Überlagerung von zwei Regeln, wobei eine Regel $R_4$ den Fahrer zu 70% normal und eine Regel $R_1$ ihn zu 30% sportlich einstuft.

Durch die Intervention des Fahrers wird ein Sollwert *Fahrer$_{soll}$* festgelegt, der sportlicher ist als der *Fahrer$_{ist}$*-Wert. Die Adaptionskomponente 4, die auch durch einen Adaptionsalgorithmus in einem Rechner realisiert sein kann, modifiziert daraufhin die Eigenschaften *Normal* und *Sportlich,* so daß sie sich dem Fahrerwunsch annähern (Figur 5). Wenn der Fahrer immer nur in der gleichen Situation interveniert, so stellt sich nach *n* Adaptionsschritten das Fuzzy-System 2 vollständig auf sein Fahrverhalten ein.

Da diese Adaption die Ausgangszugehörigkeitsfunktionen des Fuzzy-Systems 2 verändert, muß für jede Regelkonklusion eine eigene Ausgangszugehörigkeitsfunktion definiert werden. Dadurch wird es jedoch hier möglich, sich - in den Grenzen der vorgegebenen Schaltkennfelder - vollständig an den Fahrerwunsch anzupassen. Das heißt, daß zum Beispiel ein Fahrer, der unabhängig von seinem Fahrstil immer das gleiche Schaltverhalten bevorzugt, das System so anpassen kann, daß alle Ausgangszugehörigkeitsfunktionen der Variablen *Fahrerverhalten* auf der gleichen Position liegen. Dabei wird diese Position der Ausgangszugehörigkeitsfunktionen in der Variablendomäne durch das vom Fahrer vorgegebene Schaltprogramm absolut bestimmt.

Außerdem besteht die Möglichkeit, ein von einem Fahrer adaptiertes System zurückzuübersetzen, und so durch Analyse der neuen Ausgangszugehörigkeitsfunktionen einen auf diesen Fahrer abgestimmten Regelsatz zu gewinnen. Dies kann für zukünftige Systeme, bei welchen Fahrerdaten zwischen unterschiedlichen Fahrzeugen ausgetauscht werden, von großem Vorteil sein, da das System über die modifizierten Regelkonklusionen im Prinzip fahrzeugunabhängige Fahrerdaten liefert.

Die Struktur des Fuzzy-Systems 2 ist so gewählt, daß die fahrzeugspezifische Anpassung des Systems in den Eingangszugehörigkeitsfunktionen und Regelprämissen vorgenommen wird, während die Online-Adaption an das durch die Fahrerintervention gegebene Schaltverhalten in den Regelkonklusionen und Ausgangszugehörigkeitsfunktionen erfolgt. Aus den adaptierten Regelkonklusionen und/oder den Ausgangszugehörigkeitsfunktionen wird ein fahrerspezifischer Parametersatz generiert.

Der fahrerspezifische Parametersatz wird in dem Bordcomputer des Fahrzeugs gespeichert und die verschiedenen Fahrer werden über jeweils eigene eindeutig gekennzeichnete Fahrzeugschlüssel identifiziert. Der fahrerspezifische Parametersatz wird auf einem Speichermedium (Memorycard) gespeichert. Aus den adaptierten Regelkonklusionen und/oder Ausgangszugehörigkeitsfunktionen wird ein fahrzeugunabhängiger fahrerspezifischer Datensatz generiert, der auf einem Speichermedium gespeichert wird und auf andere Fahrzeuge übertragbar ist.

**Patentansprüche**

1. Steuerung (1) für ein automatisches Kraftfahrzeug-Getriebe,

   - mit Kennfeldspeichern (8, 25-27), in denen das Schaltverhalten des Getriebes abhängig von Betriebsparametern des Kraftfahrzeugs kennlinienartig abgelegt ist;
   - mit einem Fuzzy-System (2), durch welches die Betriebsparameter und der Lastzustand des Kraftfahrzeugs erfaßt und davon abhängig die Übersetzung des Getriebes anhand der Kennfeldspeicher festgelegt wird;
   - mit einer Eingabevorrichtung (17) zum Eingeben von Plus- und Minus-Schaltbefehlen durch den Fahrer, und
   - mit einer Adaptionsschaltung (4), durch die die Fahrerbefehle während des Fahrbetriebes ausgewertet werden und das Schaltverhalten des Getriebes an das von dem Fahrer gewünschte Schaltverhalten angepaßt wird,

   **dadurch gekennzeichnet, daß** durch die Adaptionsschaltung (4) zwei Grenzschaltpunkte oder -kennlinien gewichtet überlagert und damit der jeweilige Schaltpunkt festgelegt wird.

2. Steuerung nach Anspruch 1, **dadurch gekennzeichnet, daß** die Grenzschaltpunkte mit ihrem Abstand zu dem zugehörigen, sich aus dem Fahrerbefehl ergebenden Sollschaltpunkt gewichtet werden.

3. Steuerung nach einem der Ansprüche 1 oder 2, **dadurch gekennzeichnet, daß** die Grenzschaltpunkte mit ihrer gemäß folgender Formel berechneten Nähe zu dem Sollschaltpunkt gewichtet werden:

$$D_i = 1 - \frac{|l_i|}{\sum_i |l_i|} \in [0,1]$$

   worin:

   $D_i$     die Nähe einer Schaltkennlinie i zu einem gegebenen Schaltpunkt und
   $l_i$     der Abstand eines Schaltpunktes zu einer Schaltkennlinie i

   sind.

4. Steuerung nach einem der vorhergehenden Ansprüche, **dadurch gekennzeichnet, daß** sie eine Kennfeldschaltung (8) aufweist, durch die drei Grenzschaltkennlinien ("Extrem Ökonomisch", "Extrem Sportlich", "Hohe Last") überlagert werden.

5. Steuerung nach einem der vorhergehenden Ansprüche, **dadurch gekennzeichnet, daß** bei den Ausgangssignalen des Fuzzy-Systems (2) eine Priorisierung realisiert wird, indem bei Erkennen einer Lastsituation nur eine Adaption des Lastausgangssignals des Fuzzy-Klassifikators erfolgt, während bei Nichterkennen einer Lastsituation nur eine Adaption des Fahrerverhalten-Ausgangssignals erfolgt.

6. Steuerung nach einem der vorhergehenden Ansprüche, **dadurch gekennzeichnet, daß** sie einen Identifikationsspeicher (9) enthält, in den das Fahrverhalten von Fahrern in Form von bei der Adaption gewonnener fahrerindividueller Datensätze abgelegt werden.

7. Steuerung nach Anspruch 6, **dadurch gekennzeichnet, daß** die fahrerindividuellen Datensätze auf einem externen Datenspeicher abgelegt sind.

**Claims**

1. Control (1) for a vehicle automatic transmission system,

   - with map memories (8, 25- 27) in which the gear-shift behaviour of the transmission is stored as a curve relative to the operating parameters of the vehicle;

   - with a fuzzy system (2) by means of which the operating parameters and load state of the vehicle are detected and, depending on these, the ratio of the transmission is specified on the basis of the map memories;

- with an input device (17) for entering positive and negative gear-shift commands by the driver, and

- with an adaption circuit (4) by means of which the driver's commands during driving are evaluated and the gear-shift behaviour of the transmission is adapted to the gear-shift behaviour wished by the driver,

**characterised in that** two limit gear-shift points or curves are superimposed weighted by the adaption circuit (4) and thus the particular gear-shift point is established.

2. Control in accordance with Claim 1, **characterised in that** the limit gear-shift points are weighted by their distance to the associated set gear-shift point resulting from the driver's command.

3. Control in accordance with one of Claims 1 or 2, **characterised in that** the limit gear-shift points are weighted by their proximity to the set gear-shift point, calculated in accordance with the following formula:

$$D_i = 1 - \frac{|l_i|}{\sum_i |l_i|} \in [0,1]$$

in which:

$D_i$    is the proximity of a gear-shift curve i to a given gear-shift point and

$l_i$    is the distance of a gear-shift point from a gear-shift curve i.

4. Control in accordance with one of the preceding claims, **characterised in that** it has a map circuit (8), by means of which three limit gear-shift curves ("extremely economical", "extremely sporty", "high load") are superimposed.

5. Control in accordance with one of the preceding claims, **characterised in that** a prioritisation is realised with the output signals of the fuzzy system (2), **in that** if a load situation is detected only one adaption of the load output signal of the fuzzy classifier takes place, whereas if a load situation is not detected only an adaption of the driver's behaviour output signal takes place.

6. Control in accordance with one of the preceding claims, **characterised in that** it has an identification memory (9) in which the driving characteristics of drivers in the form of driver-individual data records obtained during the adaption are stored.

7. Control in accordance with Claim 6 **characterised in that** the driver-individual data records are stored on an external data memory.

**Revendications**

1. Commande (1) pour une boîte de vitesses automatique de véhicule automobile, comprenant

- des mémoires de table caractéristique (8, 25-27), dans lesquelles le comportement de changement de rapport de la boîte de vitesses est conservé à la manière de lignes caractéristiques en fonction de paramètres de fonctionnement du véhicule automobile,
- un dispositif à logique floue (2), au moyen duquel les paramètres de fonctionnement et l'état de charge du véhicule automobile sont relevés et, en fonction de ceux-ci, la démultiplication de la boîte de vitesses est déterminée à l'aide des mémoires de table caractéristique,
- un dispositif d'introduction de données (17) servant à l'introduction d'ordres de changement de rapport par plus et moins de la part du conducteur, et
- un circuit d'adaptation (4), au moyen duquel les ordres de conducteur sont analysés pendant l'utilisation de conduite et le comportement de changement de rapport de la boîte de vitesses est adapté au comportement de changement de rapport souhaité par le conducteur,

   **caractérisée en ce qu'**au moyen du circuit d'adaptation (4), deux points ou lignes caractéristiques de changement de rapport limites sont superposés d'une manière pondérée et, ainsi, le point de changement de rapport respectif est déterminé.

2. Commande suivant la revendication 1, **caractérisée en ce que** les points de changement de rapport limites sont pondérés au moyen de leur distance vis-à-vis du point de changement de rapport de consigne associé résultant de l'ordre de conducteur.

3. Commande suivant l'une des revendications 1 ou 2, **caractérisée en ce que** les points de changement de rapport limites sont pondérés au moyen de leur proximité vis-à-vis du point de changement de rapport de consigne, calculée conformément à la formule suivante :

$$D_i = 1 - \frac{|l_i|}{\sum\limits_i |l_i|} \in [0,1]$$

   dans laquelle

   $D_i$ est la proximité d'une ligne caractéristique de changement de rapport $i$ vis-à-vis d'un point de changement de rapport donné et
   $l_i$ est la distance d'un point de changement de rapport à une ligne caractéristique de changement de rapport $i$.

4. Commande suivant l'une des revendications précédentes, **caractérisée en ce qu'**elle comprend un circuit de tables caractéristiques (8) au moyen duquel trois lignes caractéristiques de changement de rapport limites ("économique extrême", "sportif extrême", "charge élevée") sont superposées.

5. Commande suivant l'une des revendications précédentes, **caractérisée en ce que**, pour les signaux de sortie du dispositif à logique floue (2), une décision de priorité est prise du fait qu'en cas de constatation d'une situation de charge, seule une adaptation du signal de sortie de charge du classificateur à logique floue a lieu, tandis qu'en cas de non constatation d'une situation de charge, seule une adaptation du signal de sortie de comportement de conducteur a lieu.

6. Commande suivant l'une des revendications précédentes, **caractérisée en ce qu'**elle contient une mémoire d'identification (9) dans laquelle les comportements de conduite de conducteurs sont conservés sous forme de jeux de données propres aux conducteurs obtenus lors de l'adaptation.

7. Commande suivant la revendication 6, **caractérisée en ce que** les jeux de données propres aux conducteurs sont conservés dans une mémoire de données externe.

## FIG 1

## FIG 2

## FIG 3

**FIG 4**

Zeitschritt $t_0$

$1$
$R_4$
$R_1$

Ökonomisch    Normal    Sportlich    Fahrverhalten

$\Delta_0$

Fahrer$_{ist}$

Fahrer$_{soll}$

**FIG 5**

Zeitschritt $t_1$

$1$
$R_4$
$R_1$

$\Delta_1 < \Delta_0$

Ökonomisch    Normal    Sportlich    Fahrverhalten

Fahrer$_{ist}$    $\Delta_1$

Fahrer$_{soll}$

**FIG 6**

Zeitschritt $t_n$

$R_4$
$R_1$

$\Delta_n = 0$

Ökonomisch    Normal    Sportlich    Fahrverhalten

Fahrer$_{ist}$

Fahrer$_{soll}$